# EUROPÄISCHE PATENTSCHRIFT

(11) **EP 3 003 770 B1**
(45) Veröffentlichungstag und Bekanntmachung des Hinweises auf die Patenterteilung: **22.01.2020**
(21) Anmeldenummer: 14730073.5
(22) Anmeldetag: 02.06.2014
(51) Int. Cl.: B60K 37/06, B60R 11/02, G06F 3/0354

(54) **KRAFTWAGEN-INFOTAINMENTSYSTEM MIT SEPARATER ANZEIGEEINHEIT**
MOTOR VEHICLE INFOTAINMENT SYSTEM HAVING A SEPARATE DISPLAY UNIT
SYSTÈME D'INFORMATION-DIVERTISSEMENT POUR VÉHICULE AVEC UNITÉ D'AFFICHAGE SÉPARÉE

(30) Priorität: 07.06.2013 DE 102013009580
(43) Veröffentlichungstag der Anmeldung: 13.04.2016
(73) Patentinhaber: Audi AG, 85045 Ingolstadt (DE)
(72) Erfinder: EGLE, Frank, 85092 Kösching (DE); SCHMAILZL, Michael, 85092 Kösching (DE); HALLIGER, Mathias, 85110 Kipfenberg (DE); WITTMANN, Robert, 85290 Geisenfeld (DE)
(74) Vertreter: Bauer, Dominik Michael
(86) Internationale Anmeldenummer: PCT/EP2014/001479
(87) Internationale Veröffentlichungsnummer: WO 2014/195003

(56) Entgegenhaltungen:
- WO-A1-2012/156029
- DE-U1-202011 100 066
- US-A1- 2010 333 146

## Beschreibung

Die Erfindung betrifft einen Kraftwagen mit einem Infotainmentsystem. Das Infotainmentsystem weist eine Steuereinrichtung zum Bereitstellen von Infotainmentfunktionen und eine von der Steuereinrichtung baulich getrennte Anzeigeeinheit mit einem Bildschirm zum Darstellung von Anzeigedaten auf. Die Anzeigeeinheit ist in einem Kraftwageninnenraum des Kraftwagens durch eine Halteeinrichtung gehalten. Beispielsweise kann die Anzeigeeinheit durch die Halteeinrichtung an einer Schalttafel, einer Mittelkonsole oder auch im Fond des Kraftwagens beispielsweise an einer Sitzlehne gehalten sein.

Mittels eines Infotainmentsystems können eine Vielzahl von Infotainmentfunktionen, wie beispielsweise Navigation, Medienwiedergabe (TV oder Blu-ray), Telefonie, Bedienung der Klimaanlage, Einstellen der Sitzposition oder auch das Konfigurieren des Fahrverhaltens des Kraftwagens (Beschleunigungsverhalten, Dämpfereinstellung) vorgenommen werden. Als eine Bedienschnittstelle kann ein Infotainmentsystem hierzu eine Anzeigeeinheit mit einem Bildschirm aufweisen, auf welchem einem Benutzer Anzeigedaten dargestellt werden können. Unter Anzeigedaten sind im Zusammenhang mit der Erfindung sowohl Informationsdaten wie beispielsweise aktuelle Parameterwerte von Kraftwagenparametern, Bedienmenüs, Videodaten von Videoströmen, wie beispielsweise Filmen, oder Anzeigedaten zum Darstellen Benutzeroberflächen mit Bedienelementen wie Buttons und Schiebern gemeint.

Die Anzeigeeinheit mit ihrem Bildschirm muss in dem Kraftwagen in der Weise angeordnet sein, dass der Benutzer den Bildschirm betrachten kann, ohne dass sich hierbei körperlich verrenken zu müssen oder bei längerer Betrachtung durch Reflektionen oder eine umständliche Körperhaltung zu ermüden. Auf keinen Fall darf während einer Fahrt der Benutzer zum Betrachten des Bildschirms gezwungen sein, eine sichere Sitzhaltung in dem Kraftwagen aufzugeben.

Problematisch ist hierbei, dass für die Vielzahl der Infotainmentfunktionen, wie sie durch das Infotainmentsystem bereitgestellt sind, unterschiedliche Sitzpositionen und Kopfhaltungen günstig sind. Hierzu ist bekannt, zur Wiedergabe von Videodaten für Passagiere im Fond des Kraftwagens (z.B. Personen auf der Rücksitzbank) einen oder mehrere Bildschirme an den Rückseiten der Lehnen des Fahrer- und des Beifahrersitzes bereitzustellen. Dies Passagiere im Fond müssen sich dann nicht nach vorne beugen, um einen Bildschirm z.B. in der Schalttafel betrachten zu können. Für den Fahrer und den Beifahrer sind dann einer oder mehrere weitere Bildschirme in der Schalttafel und/oder der Mittelkonsole bereitgestellt.

Aus dem Stand der Technik ist des Weiteren bekannt, einem Passagier zu ermöglichen, sein Laptop, Notebook oder Mobiltelefon mit dem Infotainmentsystem des Kraftwagens zu verbinden, um das mobile Gerät beispielsweise mit Strom versorgen zu können, oder eine Internetanbindung des Kraftfahrzeugs auch für das mobile Gerät nutzen zu können.

Aus der DE 10 2007 046 130 A1 ist hierzu bekannt, im Fond eines Kraftwagens einen Multimedia-Anschluss mit einer Stromversorgung und einem Datenübertragungsanschluss bereitzustellen. Beispielsweise kann dieser Anschluss in einem Dachhimmel des Kraftwagens angeordnet sein. Es handelt sich dabei um ein Kabel mit Steckern, die an einen Laptop angeschlossen werden können.

Auch aus der WO 2006/072585 A1 ist ein Fahrzeug bekannt, das Multimedia-Komponenten, wie beispielsweise ein Car-Infotainment-Modul und ein Bordtelefon, aufweisen kann. Diese Geräte können über einen im Fahrzeug bereitgestellten Anschluss mit einem Notebook oder Mobiltelefon eines Nutzers verbunden werden, so dass sie auch von diesen mobilen Geräten aus genutzt werden können.

Aus der DE 10 2007 027 231 A1 ist eine Geräteanordnung für ein Kraftfahrzeug beschrieben, welche zur Bedienung und Steuerung eines mobilen Endgeräts in dem Kraftfahrzeug ausgelegt ist. Durch die Geräteanordnung kann ein in das Fahrzeug mitgebrachtes, mobiles Navigationsgerät im Fahrzeug über eine im Fahrzeug fest verbaute Bedieneinheit bedient werden.

In der WO 2012/156029 A1 ist ein Kraftfahrzeug mit einer Halterung für einen Tablet-PC beschrieben. Über die Halteeinrichtung kann der Tablet-PC mit einem Datenbus des Kraftfahrzeugs verbunden sein. Über den Datenbus können Steuersignale zwischen einer Steuereinheit des Kraftfahrzeugs und dem Tablet-PC versendet werden.

Aus der DE 20 2011 100 066 U1 geht ein Infotainmentgerät hervor, das in dem Kraftfahrzeug an unterschiedlichen Positionen positioniert werden kann, wobei ein Sensor des Infotainmentgeräts eine aktuelle Lage im Kraftfahrzeug ermittelt. Das Infotainmentgerät kann einen Zugang zu einem CAN-Bus des Kraftfahrzeugs aufweisen. Der Zugriff auf Daten des Kraftfahrzeugs über das Bussystem ist unabhängig von einer Ankopplung des Infotainmentgeräts an eine Andockstation.

Aus der US 2010/0333146 A1 geht ein Rear-Seat-Entertainment-System hervor, an welchem ein Tablet-PC batteriebetrieben angekoppelt werden kann. Alternativ dazu kann der Tablet-PC direkt über ein Kabel mit dem Kraftfahrzeug verbunden sein.

Der Erfindung liegt die Aufgabe zugrunde, in einem Kraftwagen eine Anzeigeeinheit für ein Infotainmentsystem bereitzustellen, die zum Nutzen der unterschiedlichen Infotainmentfunktionen des Infotainmentsystems eine jeweils angemessene Körperhaltung beim Betrachten der Anzeigeeinheit ermöglicht.

Die Aufgabe wird durch einen Kraftwagen gemäß Patentanspruch 1 und eine Anzeigeeinheit gemäß Patentanspruch 13 gelöst. Vorteilhafte Weiterbildungen der Erfindung sind durch die Unteransprüche gegeben.

Die Erfindung geht von der im Stand der Technik bekannten Situation aus, dass in einem Kraftwagen ein Infotainmentsystem bereitgestellt ist, das zum Bereitstellen der Infotainmentfunktionen eine Steuereinrichtung und als eine Bedienschnittstelle eine von der Steuereinrichtung baulich getrennte Anzeigeeinheit aufweist. Andere Begriffe für Bedienschnittstelle sind Mensch-Maschine-Schnittstelle und graphische Benutzerschnittstelle (GUI - graphical user interface). Die Anzeigeeinheit weist hierzu in bekannter Weise einen Bildschirm zum Darstellen von Anzeigedaten auf, also z.B. von Videodaten eines Spielfilm oder Grafikdaten eines Bedienmenüs des Infotainmentsystems. Diese Anzeigedaten werden durch die Steuereinrichtung bereitgestellt und an die Anzeigeeinheit übertragen.

Die Anzeigeeinheit ist im Kraftwageninnenraum durch eine Halteeinrichtung des Kraftwagens gehalten. Beispielsweise kann also die Anzeigeeinheit mit ihrem Bildschirm in einem Rahmen in der Schalttafel des Kraftwagens oder aber auch im Fond an einer Rückseite eines Vordersitzes des Kraftwagens befestigt sein.

Bei dem erfindungsgemäßen Kraftwagen lässt sich die Anzeigeeinheit aber von der Halteeinrichtung abnehmen. Die Halteeinrichtung und die Anzeigeeinheit sind dazu derart ausgestaltet, dass sie zerstörungsfrei und reversibel voneinander lösbar sind. Beispielsweise kann also die Anzeigeeinheit durch eine Schnappverbindung an der Halteeinrichtung gehalten sein oder durch einen Rastmechanismus oder aber auch mittels einer Schiene auf der Halteeinrichtung aufgesteckt sein. Ein Benutzer kann also die Anzeigeeinheit von der Halteeinrichtung abnehmen und sich die Anzeigeeinheit z.B. auf den Schoß legen. Die Steuereinrichtung ist dabei dazu ausgelegt, die Anzeigedaten an die Anzeigeeinheit auch dann zu übertragen, wenn die Anzeigeeinheit von der Halteeinrichtung abgelöst ist. Die Anzeigedaten werden also auch dann durch die Anzeigeeinheit dem Benutzer dargestellt, wenn dieser die Anzeigeeinheit von der Halteeinrichtung abgelöst und z.B. im Schoß liegen hat. Ein Nutzer kann so in vorteilhafter Weise im Betrieb des Infotainmentsystems die Anzeigeeinheit unabhängig von der Halteeinrichtung im Kraftwagen bewegen und sie in einer für das Betrachten des Bildschirms günstige Position und räumliche Lage anordnen.

Bei dem erfindungsgemäßen Kraftwagen weist die Anzeigeeinheit auch einen Akkumulator für einen Betrieb der Anzeigeeinheit im von der Halteeinrichtung abgelösten Zustand auf. Hierdurch ergibt sich der Vorteil, dass auch kein Stromkabel bereitgestellt sein muss, um die Anzeigeeinheit nach dem Abnehmen betreiben zu können. Bevorzugt ist bei dieser Ausführungsform in die Halteeinrichtung eine Ladeeinheit zum Aufladen des Akkumulators integriert. Dies kann insbesondere auf dem Prinzip der Induktion basieren, so dass keine freiliegenden elektrischen Kontakte nötig sind. Die Induktionsspulen können hinter Gehäusewänden angeordnet sein.

Die Halteeinrichtung weist auch eine Signaleinheit auf, welche dazu ausgelegt ist, ein Zündung-Ein-Signal des Kraftwagens bereitzustellen. Ist die Anzeigeeinheit dann an der Halteeinrichtung befestigt, kann so die Anzeigeeinheit dieses Zündung-Ein-Signal von der Signaleinheit empfangen. Die Signalübertragung kann dabei galvanisch, kapazitiv oder induktiv erfolgen, wobei die beiden letzteren Varianten wieder keine freien elektrischen Kontakte benötigen. Auch eine Übertragung per NFC-Technologie (NFC - Near field communication) ist möglich. Die Signaleinheit ergibt den Vorteil, dass die Anzeigeeinheit ihren Bedarf an elektrischer Leistung an den Betriebszustand des Kraftwagens anpassen kann. Ist der Kraftwagen abgeschaltet, so sind in der Regel elektrische Verbraucher wie beispielsweise ein WLAN-Router deaktiviert. Entsprechend kann dann die Anzeigeeinheit sich ebenfalls deaktivieren, also z.B. in einen Stand-by-Modus wechseln, da sie sowieso keine Anzeigedaten von der Steuereinrichtung empfangen kann. Die Signaleinheit kann das Zündung-ein-Signal beispielsweise von einem CAN-Bus (CAN - Controller Area Network) empfangen. Ein Beispiel für ein Zündung-Ein-Signal ist das Klemme-15-Signal.

Bei dem erfindungsgemäßen Kraftwagen ist in einer vorteilhaften Weiterbildung in die Anzeigeeinheit auch zumindest ein Bedienelement der Bedienschnittstelle des Infotainmentsystems integriert. Beispielsweise kann also zumindest ein Bedienknopf oder Drehregler oder Schieberegler in die abnehmbare Anzeigeeinheit integriert sein. Die Anzeigeeinheit ist dann entsprechend auch dazu ausgelegt, in Abhängigkeit von einer Bedienung des zumindest einen Bedienelements, also beispielsweise bei Drücken eines Bedienknopfes, Steuerdaten an die Steuereinrichtung auszusenden. So können in vorteilhafter Weise durch die Anzeigeeinheit auch Konfigurationsdaten in dem Infotainmentsystem eingestellt werden, beispielsweise eine Sitzposition eines verstellbaren Sitzes oder ein Navigationsziel einer Navigationsanwendung des Infotainmentsystems festgelegt werden. Die entsprechende Infotainmentfunktion wird also dann durch die Steuereinrichtung in Abhängigkeit von den empfangenen Steuerdaten konfiguriert.

Bei dem erfindungsgemäßen Kraftwagen ist bevorzugt vorgesehen, dass der Bildschirm als Touchscreen ausgestaltet ist. Durch die berührungsempfindliche Oberfläche des Bildschirms kann dann ein besagtes Bedienelement der Bedienschnittstelle bereitgestellt sein. Dann muss die Anzeigeeinheit keine zusätzlichen mechanischen Stell- oder Schaltelemente aufweisen. Dies macht sie in der Herstellung günstiger.

Bevorzugt werden Daten, also die Anzeigedaten und gegebenenfalls die Steuerdaten, zwischen der Steuereinrichtung und der Anzeigeeinheit über eine Funkverbindung ausgetauscht. Bei dem erfindungsgemäßen Kraftwagen weisen in einer entsprechenden Weiterbildung die Steuereinrichtung und die Anzeigeeinheit jeweils ein Funkmodul auf und sind dazu ausgelegt, die Daten untereinander über die Funkverbindung ihrer Funkmodule auszutauschen. Bevorzugt ist als Funkverbindung eine WLAN-Verbindung (WLAN - Wireless Local Area Network) und/oder eine Bluetooth-Verbindung durch die Funkmodule bereitgestellt. Das Austauschen der Daten per Funk weist den Vorteil auf, dass die Anzeigeeinheit auch nicht über ein Datenkabel mit der Steuereinrichtung verbunden sein muss. Zusätzlich ergibt sich der Vorteil, dass eine Bilddatenmenge der Anzeigedaten größer sein kann als bei Verwendung eines Kabels. Denn große Datenmengen können nur unter kostenaufwändigen Abschirmmaßnahmen ohne eine Bildstörung mittels Kabelanbindung an einen Bildschirm übertragen werden.

Bei Verwendung einer Funkverbindung und eines Akkumulators kann die Anzeigeeinheit also völlig frei im Kraftwageninnenraum angeordnet werden. Sie kann sogar dann dazu ausgelegt sein, auch außerhalb des Kraftwagens beispielsweise in einer Wohnung des Benutzers eine Datenverbindung über einen WLAN-Router in ein Datennetzwerk aufzubauen, also z.B. in das Internet. Sie kann auch beispielsweise an einen Heimcomputer des Benutzers angeschlossen werden und dort konfiguriert oder zur Bedienung des Computers genutzt werden. Sie kann aber auch eigenständig beispielsweise als elektronischer Terminkalender oder als Medienabspielgerät genutzt werden.

Bei dem erfindungsgemäßen Kraftwagen umfasst gemäß einer vorteilhaften Weiterbildung das Infotainmentsystem auch eine von der Anzeigeeinheit verschiedene Empfangseinrichtung für einen Videodatenstrom, also beispielsweise einen DVB-Empfänger, und/oder eine Empfangseinrichtung für einen Internetdatenstrom. Solche Empfangseinrichtungen sind an sich aus dem Stand der Technik bekannt. Im Zusammenhang mit dem erfindungsgemäßen Kraftwagen ist nun aber vorgesehen, dass die Steuereinrichtung dazu ausgelegt ist, einen von der Empfangseinrichtung empfangenen Datenstrom an die Anzeigeeinheit weiterzuleiten. Hierdurch ergibt sich der Vorteil, dass ein Benutzer über die Anzeigeeinheit, sei sie in der Halteeinrichtung befestigt oder von dieser abgenommen, ein Fernsehprogramm anschauen oder aber beispielsweise im Internet browsen kann.

Bei dem erfindungsgemäßen Kraftwagen ist gemäß einer Ausführungsform vorgesehen, dass das Infotainmentsystem auch eine von der Anzeigeeinheit verschiedene Speichereinrichtung zum Speichern zumindest eines Teils der Anzeigedaten aufweist. Beispielsweise können in der Speichereinrichtung Videofilme oder Fotografien gespeichert sein. Die Steuereinrichtung ist dann dazu ausgelegt, die gespeicherten Anzeigedaten abzurufen und an die Anzeigeeinheit zu übertragen. Genauso kann zusätzlich oder alternativ zur Speichereinrichtung auch eine Medienwiedergabeeinrichtung in dem Kraftwagen eingebaut sein, also beispielsweise ein Blu-ray-Abspielgerät oder ein DVD-Abspielgerät. Auch dieses kann Videodaten erzeugen, die von der Steuereinrichtung ausgelesen und an Anzeigeeinheit übertragen werden. Sowohl die Speichereinrichtung als auch die Medienwiedergabeeinrichtung müssen dann also nicht Bestandteil der Anzeigeeinheit sein, sondern können an anderer Stelle im Kraftwagen verbaut sein. Dies weist den Vorteil auf, dass die Anzeigeeinheit selbst deshalb besonders leicht und insbesondere auch sehr flach ausgestaltet sein kann.

Die Erfindung sieht in einer Ausführungsform vor, dass die Anzeigeeinheit ein Sicherheitsmodul aufweist, in welchem Authentifizierungsdaten gespeichert sind. Die Steuereinrichtung ist in diesem Fall dazu ausgelegt, Anzeigedaten an die Anzeigeeinheit nur für den Fall zu übertragen, dass die Anzeigeeinheit auch bei der Steuereinrichtung authentifiziert ist. Hierzu kann die Steuereinrichtung beispielsweise ein Anfragesignal an die Anzeigeeinheit aussenden, welches durch die Anzeigeeinheit auf Grundlage der Authentifizierungsdaten beantwortet wird. Die Steuereinrichtung verifiziert dann die Antwort, indem sie beispielsweise die empfangenen Authentifizierungsdaten mit einer Liste von Authentifizierungsdaten für autorisierte Geräte vergleicht. Durch ein Sicherheitsmodul kann vorteilhafterweise sichergestellt werden, dass nur mit einer solchen Anzeigeeinheit auf Konfigurationsdaten des Kraftwagens zugegriffen wird, die auch tatsächlich für den Zugriff autorisiert ist. Hierdurch wird beispielsweise vermieden, dass die Anzeigeeinheiten zweier nebeneinander fahrender Kraftfahrzeuge nicht auch das Infotainmentsystem des jeweils anderen Kraftfahrzeugs manipulieren.

Bei dem erfindungsgemäßen Kraftwagen ist gemäß einer Ausführungsform vorgesehen, in dem Kraftwagen auch eine Ortungseinrichtung bereitzustellen, welche zum Orten der Anzeigeeinheit ausgelegt ist. Die Ortungseinrichtung erzeugt also Ortungsdaten, welche angeben, wo in dem Kraftwagen sich die Anzeigeeinheit gerade befindet. Dies wird insbesondere dazu genutzt, das Darstellen bestimmter Anzeigedaten zu blockieren oder abzubrechen, wenn die Anzeigeeinheit beispielsweise von dem Fahrer genutzt wird. Hierdurch kann vermieden werden, dass sich ein Fahrer während der Fahrt zum Anschauen von Spielfilmen verleiten lässt. Die Steuereinrichtung ist also dazu ausgelegt, zumindest einen Teil der Anzeigedaten, wie beispielsweise Videodaten, in Abhängigkeit von den Ortungsdaten der Ortungseinrichtung zu übertragen. Als Ortungseinrichtung kann in einer besonders einfach zu realisierenden Ausführungsform ein Sensor vorgesehen sein, welcher in der Halteeinrichtung angeordnet ist und welcher durch ein Sensorsignal anzeigt, ob die Anzeigeeinheit gerade an der Halteeinrichtung befestigt ist oder nicht. Wenn die Anzeigeeinheit an der Halteeinrichtung befestigt ist, können gemäß einer Ausführungsform bestimmte Anzeigedaten, insbesondere Videodaten, nicht angezeigt werden. Wird dagegen die Anzeigeeinheit von der Halteeinrichtung abgelöst, ist davon auszugehen, dass beispielsweise ein Beifahrer oder eine Person auf dem Rücksitz die Anzeigeeinheit nutzt. Hier ist dann das Darstellen von Videodaten sicher, so dass Anzeigedaten unabhängig von ihrem Typ von der Steuereinrichtung hin zur Anzeigeeinheit übertragen werden.

Das Überwachen des Ortes der Anzeigeeinheit kann aber auch beispielsweise über eine Kamera erfolgen, welche den Kraftwageninnenraum filmt und deren Bilder durch eine Bildanalyseeinrichtung ausgewertet werden, um Ortungsdaten betreffend die Anzeigeeinheit bereitzustellen. Die Anzeigeeinheit kann auch eine Infrarot-Lichtquelle aufweisen, beispielsweise eine Leuchtdiode, und diese Infrarot-Lichtquelle kann dann in einem Bild einer Infrarotkamera geortet werden und hieraus dann Ortungsdaten für die Ortung der Anzeigeeinheit bereitgestellt werden.

Bei dem Kraftwagen weist in einer bevorzugten Ausführungsform der Bildschirm der Anzeigeeinheit eine Schutzvorrichtung zum Schützen einer Person im Falle eines Crashs des Kraftwagens auf, das heißt bei einer Kollision des Kraftwagens mit einem anderen Gegenstand. Hierzu ist auf einer transparenten Sichtscheibe des Bildschirms, also dessen Bildschirmscheibe aus beispielsweise transparentem Kunststoff oder Glas, eine Schicht aus einem flexiblen Material angeordnet. Beispielsweise kann die Sichtscheibe mit einem Polymer beschichtet sein. Die Schicht kann beispielsweise als eine Folie bereitgestellt sein, die auf der Sichtscheibe aufgeklebt oder auflaminiert ist. Durch die Schicht aus dem flexiblen Material ergibt sich der Vorteil, dass eine Person im Falle eines Crashs für den Fall, dass sie beispielsweise mit dem Gesicht gegen die Sichtscheibe schlägt, keine Schnittwunden durch Splitter der Sichtscheibe erhält. Die flexible Schicht bedeckt die Sichtscheibe und befindet sich somit zwischen der Sichtscheibe und der Haut der Person.

Splittert die Sichtscheibe, so gibt das flexible Material nach und bildet auch bei zerbrochener Sichtscheibe einen Schutzmantel. Insbesondere ist eine Schicht aus einem Material gewählt, das insoweit schnittfest ist, dass bei Eindrücken der Sichtscheibe durch einen Kopf einer Person während eines Crashs ein ungünstig angeordneter Splitter das Material des Schicht nicht durchtrennen kann.

Ein weiterer Vorzug ergibt sich, wenn die Sichtscheibe auch reflexionsarm ausgestaltet ist. Dann kann der Bildschirm der Anzeigeeinheit unabhängig von seiner Ausrichtung im Kraftwagen stets gut betrachtet werden, auch wenn beispielsweise Sonnenlicht durch die Fenster des Kraftwagens in dessen Innenraum einstrahlt.

Bei der Halteeinrichtung muss es sich nicht um einen einzelnen Halteplatz handeln. Bevorzugt ist zumindest vorgesehen, dass die Halteeinrichtung einen Halteplatz im Fond des Kraftwagens bereitstellt. Es kann durch die Halteeinrichtung aber auch ein Halteplatz beispielsweise in der Schalttafel, in der Mittelkonsole, am Dachhimmel, an der Rückseite des Fahrersitzes und derjenigen des Beifahrersitzes bereitgestellt sein.

Genauso sieht der Kraftwagen in einer Ausführungsform vor, dass das Infotainmentsystem mehrere Anzeigeeinheiten der genannten Art aufweist. Dann können beispielsweise Personen im Fond des Kraftwagens mit einer eigenen Anzeigeeinheit Infotainmentfunktionen nutzen, während der Beifahrer oder Fahrer über eine andere Anzeigeeinheit ebenfalls auf Infotainmentfunktionen zugreifen können.

Hierbei muss aber sichergestellt sein, dass Infotainmentfunktionen, die der Fahrer beispielsweise für das Führen des Kraftwagens benötigt, nicht dadurch verlangsamt oder sogar blockiert werden, dass beispielsweise ein Passagier im Fond einen Videodatenstrom mit hoher Auflösung betrachtet, so dass die Bandbreite zum Übertragen der Anzeigedaten an die Anzeigeeinheit des Fahrers eingeschränkt wird. Hierzu sieht der erfindungsgemäße Kraftwagen gemäß einer Ausführungsform vor, dass die Steuereinrichtung eine in einem vorderen Teil des Kraftwagens angeordnete erste Recheneinheit und eine in einem hinteren Teil des Kraftwagens angeordnete zweite Recheneinheit aufweist. Beide Recheneinheiten sind zum Bereitstellen jeweils eines Teils der Anzeigedaten ausgestaltet. Hierbei ist aber die zweite Recheneinheit, nämlich diejenige im hinteren Teil des Kraftwagens, dazu ausgelegt, ihre Anzeigedaten ausschließlich für den Fall an eine Anzeigeeinheit zu übertragen, dass sich diese Anzeigeeinheit in einem Fond des Kraftwagens befindet. Beispielsweise kann hierzu eine Sendereichweite eines Funkmoduls der zweiten Recheneinheit entsprechend auf den Fond des Kraftwagens begrenzt sein. Hierzu kann beispielsweise ein Beamforming genutzt werden.

Wie bereits ausgeführt, ist Kern der Erfindung, dass bei dem erfindungsgemäßen Kraftwagen die Anzeigeeinheit des Infotainmentsystems abnehmbar ausgestaltet ist. Entsprechend gehört zu der Erfindung auch eine solche separate Anzeigeeinheit für ein Infotainmentsystem gemäß einer Ausführungsform des erfindungsgemäßen Kraftwagens. Die erfindungsgemäße Anzeigeeinheit weist eine mechanische Schnittstelle auf, die dazu ausgelegt ist, die Anzeigeeinheit mit der Halteeinrichtung des Kraftwagens zerstörungsfrei und reversibel lösbar zu verbinden. Beispielsweise kann also als mechanische Schnittstelle ein Eingriff für einen Schnappverschluss der Halteeinrichtung, eine Schiene für einen Eingriff in eine Nut der Halteeinrichtung oder eine Nut zum Eingriff einer Schiene der Halteeinrichtung, ein Magnet oder auch eine magnetisierbare Metallplatte für einen Haltemagneten der Halteeinrichtung bereitgestellt sein. Zusätzlich weist die erfindungsgemäße Anzeigeeinheit eine eigene Recheneinheit auf, die dazu ausgelegt ist, mit der Steuereinheit des Infotainmentsystems des Kraftwagens zusammenzuwirken. Durch diese Recheneinheit ist es dann ermöglicht, die von der Steuereinrichtung empfangenen Anzeigedaten aufzubereiten, um diese Anzeigedaten auf dem Bildschirm darzustellen.

In einer bevorzugten, nicht gesondert beanspruchten Ausführungsform der Anzeigeeinheit umfasst die Anzeigeeinheit auch ein Betriebssystem. Die Recheneinheit ist dann dazu ausgelegt, das Betriebssystem auszuführen. Hierdurch ergibt sich der Vorteil, dass auf der Recheneinheit zusätzliche, eigene Programmen oder Programmapplikationen installiert werden können und durch Bereitstellen entsprechender, einzelner Programmapplikationen der Zugriff auf einzelne Infotainmentfunktionen der Steuereinrichtung ermöglicht werden kann.

Eine weitere, nicht gesondert beanspruchte Ausführungsform sieht vor, dass die Anzeigeeinheit eine oder mehrere Kameras zur Realisierung einer Videotelefonie aufweist. Das Funkmodul für die Telefonie, beispielsweise ein UMTS-Modul oder LTE-Modul, kann dann in dem Kraftwagen, also außerhalb der Anzeigeeinheit, bereitgestellt sein. Die Anzeigeeinheit kann die Telefoniedaten dann an die Steuereinrichtung des Kraftwagens übertragen, welche die eigentliche Telefonverbindung über das Telefoniemodul herstellt.

Des Weiteren kann die Anzeigeeinheit ein oder mehrere Mikrofone aufweisen. Insbesondere bei mehreren Mikrofonen ergibt sich der Vorteil, dass durch ein Beamforming eine Positionsbestimmung des Sprechers ermöglicht ist und hierdurch Videotelefonie mit besonders hoher Sprachqualität möglicht ist.

Im Folgenden ist die Erfindung noch einmal anhand von konkreten Ausführungsbeispielen erläutert. Hierzu zeigen:
- Fig. 1: eine schematische Darstellung einer ersten Ausführungsform des erfindungsgemäßen Kraftwagens und
- Fig. 2: eine schematische Darstellung einer zweiten Ausführungsform des erfindungsgemäßen Kraftwagens.

Die Beispiele stellen bevorzugte Ausführungsformen der Erfindung dar. Bei den im Folgenden erläuterten Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

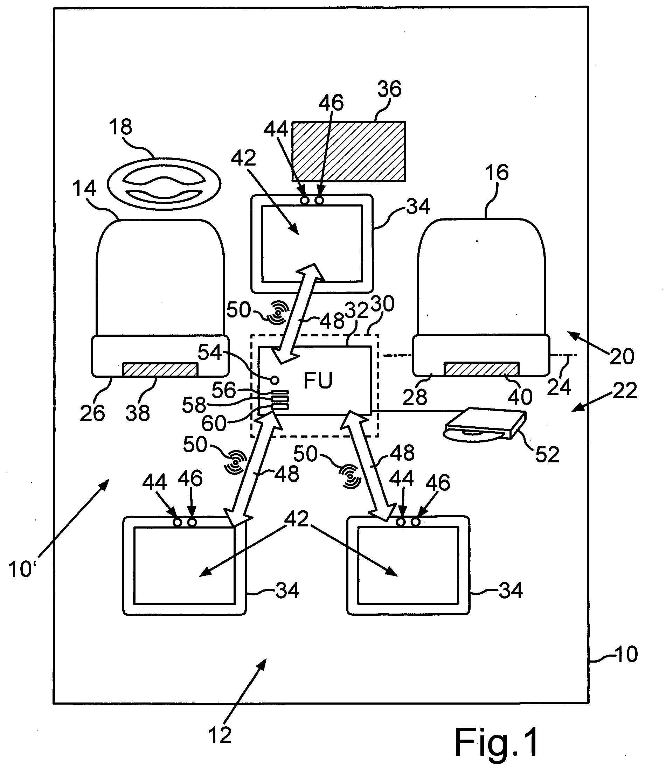

In Fig. 1 ist ein Kraftwagen 10 gezeigt, bei dem es sich beispielsweise um einen Personenkraftwagen handeln kann. Die Fig. 1 zeigt einen Kraftwageninnenraum 10' in einer Draufsicht, also einer Vogelperspektive. Dargestellt sind ein Infotainmentsystem 12, ein Fahrersitz 14, ein Beifahrersitz 16 und ein Lenkrad 18. Für die weiteren Erläuterungen sind in dem Kraftwagen ein vorderer, zur Fahrzeugfront des Kraftwagens 10 gelegener Teil 20 und ein zum Heck des Kraftwagens 10 hin gelegener hinterer Teil 22 durch eine Trennlinie 24 unterschieden. Die Lage der Trennlinie 24 kann beispielsweise durch eine Rücklehne 26 des Fahrersitzes 14 und eine Rücklehne 28 des Beifahrersitzes 16 definiert sein. Im hinteren Teil 22 kann sich der Fond mit einer (nicht dargestellten) Rücksitzbank befinden.

Das Infotainmentsystem 12 umfasst eine Steuereinrichtung 30 mit einer Recheneinheit 32 sowie beispielhaft drei Anzeigeeinheiten 34 zum Bedienen des Infotainmentsystems 12. Die Steuereinheit 30 kann beispielsweise ein Steuergerät umfassen. Die Anzeigeeinheiten 34 sind abnehmbar, das heißt sie können von Halteplätzen 36, 38, 40 im Kraftwageninnenraum 10' abgenommen werden und beispielsweise auf den Schoß gelegt werden. Hierzu müssen die Anzeigeeinheiten 34 nicht abgeschraubt werden oder dergleichen, sondern die Halteplätze 36, 38, 40 einerseits und die Anzeigeeinheiten 34 andererseits weisen jeweils eine magnetische oder mechanische Schnittstelle auf, die derart ausgestaltet ist, dass die Anzeigeeinheiten 34 von ihrem jeweiligen Halteplatz 36, 38, 40 zerstörungsfrei und reversibel lösbar von einem Benutzer des Kraftwagens 10 im Betrieb desselben, insbesondere im Betrieb des Infotainmentsystems 12, abgenommen werden können und hierbei weiter betrieben werden. Beispielsweise kann also Befestigungs-Schnittstelle der Halteplätze 36, 38, 40 einerseits und der Anzeigeeinheit 34 andererseits umfassen: ein Schienensystem, ein Rastmechanismus, eine Magnethalterung, einen Schnappverschluss und/oder einen Mechanismus mit Haltestiften, die in Aussparungen der Anzeigeeinheit greifen und beispielsweise durch einen Knopfdruck eingezogen werden können.

Jede Anzeigeeinheit 34 weist einen Bildschirm 42 auf, der bevorzugt Bestandteil eines Touchscreens (Bildschirm mit berührungsempfindlicher Oberfläche) ist. Optional kann eine Anzeigeeinheit 34 auch eine Kamera 44 und/oder eine Mikrofonanordnung oder ein Mikrofon 46 aufweisen. Eine Datenübertragung zwischen der Recheneinheit 32 und einer jeweiligen Anzeigeeinheit 34 kann über eine Funkverbindung 48 durchgeführt werden. Beispielsweise kann die Funkverbindung 48 mittels einer WLAN-Technologie 50 bereitgestellt sein, was in der Fig. 1 durch ein WLAN-Symbol für die WLAN-Technologie 50 angedeutet ist. Über die Funkverbindung 48 können Audiodaten, Videodaten und weitere Daten, insbesondere Bilddaten zum Darstellen einer Bedienoberfläche auf den Bildschirmen 42 übertragen werden. Genauso können Bedienhandlungen, die an den Anzeigeeinheiten 34 erfasst werden, beispielsweise das Bedienen des genannten Touchscreens, durch die Anzeigeeinheiten 34 in entsprechende Steuerdaten umgewandelt werden und diese ebenfalls über die Funkverbindung 48 zu der Recheneinheit 32 hin übertragen werden.

In dem in Fig. 1 gezeigten Bespiel kann die Recheneinheit 32 in dem vorderen Teil 20, beispielsweise unterhalb der Mittelkonsole oder in der Schalttafel, eingebaut sein. Es handelt sich dann um eine sogenannte Front Unit (FU, Vordere Recheneinheit). Zu dem Infotainmentsystem 12 kann auch ein Medienabspielgerät 52, beispielsweise ein DVD-Abspielgerät oder Blu-ray-Abspielgerät gehören. Die von dem Abspielgerät 52 von einem optischen Datenträger ausgelesenen Daten können ebenfalls über die Funkverbindungen 48 an eine oder mehrere der Anzeigeeinheiten 34 übertragen werden und dort dargestellt werden.

Die Steuereinheit 30 kann auch weitere Anschlüsse, beispielsweise einen Audio-Anschluss 54, einen SDXC-Anschluss und/oder einen HDMI-Anschluss 60 aufweisen. Über diese Anschlüsse 54, 56, 58, 60 angeschlossene Geräte können dann ebenfalls über die Funkverbindung 48 Daten mit den Anzeigeeinheiten 34 austauschen.

Die Anzeigeeinheiten 34 bilden intelligente Displays (Smartdisplays) zum Darstellen von Bilddaten sowie zum Erzeugen von Steuersignalen, die über die drahtlose Datenschnittstelle, nämlich die Funkverbindungen 48, zwischen der Steuereinheit 30 im Kraftwagen 10 und den Anzeigeeinheiten 34 ausgetauscht werden können. Jede Anzeigeeinheit 34 enthält eine eigene Recheneinheit, sowie eine eigene Batterie. Eine Anzeigeeinheit kann an unterschiedlichen Stellen im Fahrzeug, nämlich den Halteplätzen 36, 38, 40, durch eine entsprechende Halterung angesteckt werden. Die Halteplätze 36, 38, 40 bilden insgesamt eine Halteeinrichtung. Durch diese Halterung kann auch der in der Anzeigeeinheit enthaltene Akku geladen werden. Hierzu sind an den Halteplätzen 36, 38, 40 z.B. entsprechende Ladekontakte integriert. Gleichzeitig wird eine sichere und feste Aufbewahrung der Anzeigeeinheiten 34 im Kraftwagen 10 gewährleistet. Die Halterungen können sich im Frontbereich 20 des Fahrzeugs (zum Beispiel Armaturenbrett, Mittelkonsole vorne) oder im Fondbereich, also im hinteren Bereich 22, befinden (zum Bespiel Fahrer-/Beifahrerrücksitzseite, Mittelkonsole Fondbereich). Toucheingaben beziehungsweise Tastendrücke an den Anzeigeeinheiten 34 werden über einen Rückkanal der drahtlosen Verbindung 48 an die Steuereinheit übertragen. In jeder Anzeigeeinheit 34 können sich eine oder mehrere Kameras 44 zur Realisierung einer Videotelefonie befinden. Des Weiteren kann ein oder mehrere Mikrofone 46 (Beamforming-Positionsbestimmung des Sprechers) in jeder Anzeigeeinheit 34 verbaut sein. Auf jeder Anzeigeeinheit 34 befindet sich ein Betriebssystem. Hierzu kann beispielsweise das an sich bekannte Android-Betriebssystem verwendet werden. Das Betriebssystem kann durch Ausführen entsprechender Programme, beispielsweise einem Internet-Browser, einen Zugriff auf ein Internet-Online-Portal bieten, um weitere Anwendungen auf der Anzeigeeinheit 34 installieren zu können.

Wie in der Fig. 1 gezeigt, kann die Anwendung der Anzeigeeinheiten 34 im hinteren Teil 22, insbesondere im Fondbereich, in einer einfachen Ausbaustufe (Rear Seat Entertainment Basic) mit derselben Front Unit FU zusammen verwendet werden, welche auch Anzeigedaten an im vorderen Teil 20 befindlichen Anzeigeeinheiten 34 bereitstellen.

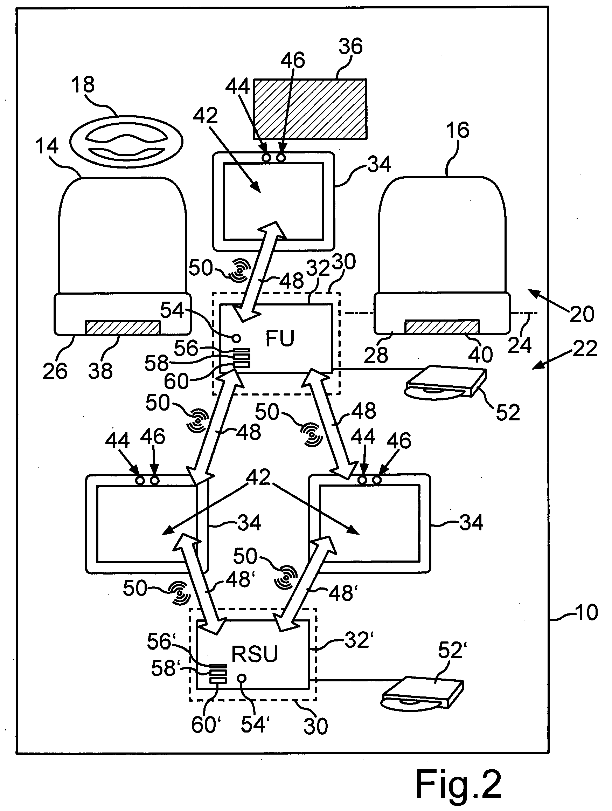

Um aber Benutzern zusätzliche Infotainmentfunktionen bieten zu können, beispielsweise gleichzeitiges Abspielen unterschiedlicher hochauflösender Videobilddaten in den unterschiedlichen Anzeigeeinheiten 34, ist eine größere Bandbreite für die Übertragung der Anzeigedaten nötig. In Fig. 2 ist hierzu eine Ausführungsform gezeigt, bei welcher im hinteren Teil 22 eine weitere Recheneinheit 32' bereitgestellt ist. Zur besseren Orientierung sind in Fig. 2 die Elemente, welche dieselbe Funktion aufweisen, wie entsprechende Elemente in der Fig. 1, mit denselben Bezugszeichen wie in Fig. 1 versehen.

Die weitere Recheneinheit 32' ist hier als Rear-Seat-Unit (RSU) ausgestaltet. Diese kann durch eine jeweilige Funkverbindung 48', die beispielsweise ebenfalls auf der WLAN-Technologie 50 beruhen kann, zusätzliche Anzeigedaten an den Anzeigeeinheiten 34 im hinteren Teil 22 des Kraftwagens 10 übertragen.

Auch an der Rear Seat Unit, das heißt der Recheneinheit 32', können ebenfalls Anschlüsse 54', 56', 58', 60' zum Anschließen weiterer Geräte bereitgestellt sein. Auch ein Medienabspielgerät 52' kann bereitgestellt sein, welches dann von den Anzeigeeinheiten 34 im hinteren Teil 22 genutzt werde kann.

Insgesamt bietet das Bereitstellen von abnehmbaren Anzeigeeinheiten 34 eine flexiblere Display-Nutzung und Darstellung hochauflösender Bilddaten sowohl im stationären als auch mobilen Fahrzeugeinsatz.

Im Folgenden ist dargestellt, welche möglichen Realisierungen einer Nutzung und Steuerung von Infotainmentfunktionen durch die Erfindung ermöglicht sind. Ein touchfähiges intelligentes Display (Smart Display), welches drahtlos (zum Beispiel via WLAN) mit einer Front Unit oder einer Rear Unit eines Infotainmentsystems im Fahrzeug verbunden ist, ermöglicht dem Kunden, das gesamte Infotainmentsystem inklusive der Komforteinstellungen (zum Beispiel Klima-, Sitzeinstellung) zu bedienen.

Folgende Einstell-/Bedien-, Auswahlmöglichkeiten können mit diesem Smartdisplay, das heißt den Anzeigeeinheiten 34, insbesondere vorgenommen werden:
- Mediensteuerung (Audio, Video-Auswahl und Steuerung wie Stopp, Play, Pause),
- Anzeige und Steuerung eines fest verbauten oder zusätzlich angeschlossenen DVD-/Blu-ray-Laufwerks beziehungsweise -wechslers,
- Wiedergabe und Steuerung eines fest verbauten Radioempfängers,
- Anzeige und Steuerung eines verbauten TVs, beispielsweise eines DVBT-Tuners,
- Darstellen der aktuellen Position und/oder Navigationsroute (Daten werden per Funkstrecke vom fest verbauten Navigationssystem des Kraftwagens an die entsprechende Anzeigeeinheit übertragen),
- Eingabe eines neuen Navigationsziels an einer Anzeigeeinheit 34 und Übermitteln an das fest verbaute Navigationssystem des Kraftwagens;
- Durchführen einer Videotelefonie mittels integrierter Kamera 44 und Mikrofone 46 in der Anzeigeeinheit 34,
- Darstellen von Spielen, welche durch eine an der Anzeigeeinheit verbundene Bedieneinheit gesteuert werden können, wobei die Bedieneinheit, beispielsweise ein Joystick oder eine Tastatur, bevorzugt drahtlos mit der Anzeigeeinheit 34 kommuniziert,
- Darstellen der Bildinhalte (zum Beispiel Videodaten oder Spiele) eines mobilen Endgeräts, beispielsweise eines Smartphones oder eines Tablet-PCs, welches per Funk mit der Anzeigeeinheit 34 direkt oder indirekt über die Steuereinheit 30 kommuniziert,
- Anpassen der Klimaeinstellungen der Anzeigeeinheit 34,
- Anpassen der Sitzeinstellungen mittels der Anzeigeeinheit 34,
- Anpassen der Sitz-Massagefunktionen,
- Anpassen der Lichtsteuerung,
- Zugriff auf Telefon-/Adressdatenbank des Infotainmentsystems, die in der Steuereinheit 30 gespeichert sein kann,
- Zeicheneingabe für Navigation, Telefonbuch, Mediensuche insbesondere mittels Handschrifterkennung und Weiterleiten der erkannten Zeichen oder auch der erfassten Schriftzüge an die Steuereinheit 30,
- Zeicheneingabe mittels Onscreen-Tastatur im Falle eines Touchscreens als Bildschirms 42, und Weiterleiten der Zeichen an die Steuereinheit 30,
- Steuerung mittels Lagersensors, welcher in der Anzeigeeinheit 34 verbaut sein kann,
- Steuerung mittels Sprachbedienung, wobei eine Aufzeichnung mittels verbauter Mikrofone 46 und dann das Weiterleiten der erkannten Kommandos oder extrahierter Sprachmerkmale (zum Beispiel cepstrale Koeffizienten) oder auch des Audiosignals selbst an die Steuereinheit 30 vorgesehen sein kann.

Insgesamt ist ermöglicht die Erfindung, anstelle eines fest verbauten Displays, was nur an einer Stelle im Kraftwagen abgelesen und im Falle eines touchfähigen Displays auch nur an der fest verbauten Stelle bedient werden kann, eine frei im Kraftwagen positionierbare Anzeigeeinheit bereitzustellen, die als Bedienschnittstelle für ein Infotainmentsystem des Kraftwagens ausgestaltet ist und mit welcher mittels der Funkverbindung auch größere Datenmengen, beispielsweise hoch auflösende Videodaten, störungsfrei auf einem Bildschirm angezeigt werden können.

## Patentansprüche

1. Kraftwagen (10) mit einem Infotainmentsystem (12), das zum Bereitstellen von Infotainmentfunktionen eine Steuereinrichtung (30) und als eine Bedienschnittstelle eine von der Steuereinrichtung (30) baulich getrennte Anzeigeeinheit (34) mit einem Bildschirm (42) zum Darstellen von Anzeigedaten aufweist, wobei die Steuereinrichtung (30) zum Bereitstellen der Anzeigedaten und zum Übertragen der Anzeigedaten an die Anzeigeeinheit (34) ausgelegt ist und wobei in einem Kraftwageninnenraum (10') des Kraftwagens (10) eine Halteeinrichtung (36, 38, 40) bereitgestellt ist, die zum mechanischen Halten der Anzeigeeinheit (34) ausgestaltet ist, wobei die Halteeinrichtung (36, 38, 40) und die Anzeigeineinheit (34) voneinander zerstörungsfrei und reversibel lösbar ausgestaltet sind und die Steuereinrichtung (30) dazu ausgelegt ist, die Anzeigedaten an die Anzeigeeinheit (34) auch im von der Halteeinrichtung (36, 38, 40) abgelösten Zustand zu übertragen,
**dadurch gekennzeichnet, dass**
die Anzeigeinheit (34) einen Akkumulator für einen Betrieb im von der Halteeinrichtung (36, 38, 40) abgelösten Zustand aufweist und in die Halteeinrichtung eine Ladeeinheit zum Aufladen eines Akkumulators der Anzeigeeinheit (34) integriert ist und die Halteeinrichtung (36, 38, 40) eine Signaleinheit aufweist, welche dazu ausgelegt ist, ein Zündung-Ein-Signal des Kraftwagens (10) von einem CAN-Bus, Controller Area Network, zu empfangen und bereitzustellen, und die Anzeigeeinheit (34) dazu ausgelegt ist, das Zündung-Ein-Signal von der Signaleinheit der Halteeinrichtung (36, 38, 40) zu empfangen, falls die Anzeigeeinheit (34) an der Halteeinrichtung (36, 38, 40) befestigt ist, und ihren Bedarf an elektrischer Leistung an den Betriebszustand des Kraftwagens (10) anzupassen, indem die Anzeigeeinheit (34) sich deaktiviert, falls der Kraftwagen (10) abgeschaltet ist.

2. Kraftwagen (10) nach Anspruch 1, wobei in die Anzeigeeinheit (34) zumindest ein Bedienelement (42) der Bedienschnittstelle integriert ist und die Anzeigeeinheit (34) dazu ausgelegt ist, in Abhängigkeit von einer Bedienung des zumindest einen Bedienelements (42) Steuerdaten an die Steuereinrichtung (30) auszusenden.

3. Kraftwagen (10) nach einem der vorhergehenden Ansprüche, wobei der Bildschirm (42) als Touchscreen (42) ausgestaltet ist.

4. Kraftwagen (10) nach einem der vorhergehenden Ansprüche, wobei die Steuereinrichtung (30) und die Anzeigeinheit (34) jeweils ein Funkmodul aufweisen und dazu ausgelegt sind, Daten untereinander über eine Funkverbindung (48) ihrer Funkmodule auszutauschen, wobei bevorzugt als die Funkverbindung (48) eine WLAN-Verbindung (50) und/oder eine Bluetooth-Verbindung durch die Funkmodule bereitgestellt ist.

5. Kraftwagen (10) nach einem der vorhergehenden Ansprüche, wobei das Infotainmentsystem (12) eine von der Anzeigeeinheit (34) verschiedene Empfangseinrichtung (54, 54', 56, 56', 58, 58', 60, 60') für einen Videodatenstrom und/oder Internetdatenstrom aufweist und die Steuereinrichtung (30) dazu ausgelegt ist, einen von der Empfangeineinrichtung (54, 54', 56, 56', 58, 58', 60, 60') empfangenen Datenstrom an die Anzeigeeinheit (34) weiterzuleiten.

6. Kraftwagen (10) nach einem der vorhergehenden Ansprüche, wobei das Infotainmentsystem (12) eine von der Anzeigeeinheit (34) verschiedene Speichereinrichtung zum Speichern und/oder Medienwiedergabeeinrichtung (52, 52') zum Abspielen zumindest eines Teils der Anzeigedaten aufweist und die Steuereinrichtung (30) dazu ausgelegt ist, den Teil der Anzeigedaten abzurufen und an die Anzeigeeinheit (34) zu übertragen.

7. Kraftwagen (10) nach einem der vorhergehenden Ansprüche, wobei die Anzeigeeinheit (34) ein Sicherheitsmodul aufweist, in welchem Authentifizierungsdaten gespeichert sind, und wobei die Steuereinrichtung (30) dazu ausgelegt ist, die Anzeigedaten an die Anzeigeeinheit (34) nur für den Fall zu übertragen, dass die Anzeigeeinheit (34) bei der Steuereinrichtung (30) authentifiziert ist.

8. Kraftwagen (10) nach einem der vorhergehenden Ansprüche, wobei in dem Kraftwagen (10) eine Ortungseinrichtung bereitgestellt ist, welche zum Orten der Anzeigeeinheit (34) ausgelegt ist, und wobei die Steuereinrichtung (30) dazu ausgelegt ist, zumindest einen Teil der Anzeigedaten in Abhängigkeit von Ortungsdaten der Ortungseinrichtung zu übertragen.

9. Kraftwagen (10) nach einem der vorhergehenden Ansprüche, wobei auf einer transparenten Sichtscheibe des Bildschirms (42) der Anzeigeinheit (34) eine Schicht aus einem flexiblen Material angeordnet ist.

10. Kraftwagen (10) nach einem der vorhergehenden Ansprüche, wobei durch die Halteeinrichtung (36, 38, 40) zumindest ein Halteplatz (38, 40) in einem Fond (22) des Kraftwagens (10) bereitgestellt ist.

11. Kraftwagen (10) nach einem der vorhergehenden Ansprüche, wobei die Steuereinrichtung (30) eine in einem vorderen Teil (20) des Kraftwagens (10) angeordnete erste Recheneinheit (32) und eine in einem hinteren Teil (22) des Kraftwagens (10) angeordnete zweite Recheneinheit (32') umfasst, wobei beide Recheneinheiten (32, 32') zum Bereitstellen jeweils eines Teils der Anzeigedaten ausgestaltet sind und die zweite Recheneinheit (32') dazu ausgelegt ist, an die Anzeigeeinheit (34) ihre Anzeigedaten ausschließlich für den Fall zu übertragen, dass sich die Anzeigeeinheit (34) in einem Fond (22) des Kraftwagens (10) befindet.

12. Kraftwagen (10) nach einem der vorhergehenden Ansprüche, wobei das Infotainmentsystem (12) mehrere Anzeigeinheiten (34) der genannten Art aufweist.

13. Anzeigeeinheit (34) für ein Infotainmentsystem (12) eines Kraftwagens (10) gemäß einem der vorhergehenden Ansprüche, wobei die Anzeigeinheit (34) dazu eine mechanische Schnittstelle aufweist, die dazu ausgelegt ist, die Anzeigeinheit (34) mit der Halteeinrichtung (36, 38, 40) des Kraftwagens (10) zerstörungsfrei und reversibel lösbar mechanisch und/oder magnetisch zu verbinden, und wobei die Anzeigeeinheit (34) eine eigene Recheneinheit aufweist, die dazu ausgelegt ist, mit der Steuereinrichtung (30) des Infotainmentsystems (12) des Kraftwagens (10) zusammenzuwirken,
**dadurch gekennzeichnet, dass** die Anzeigeinheit (34) einen Akkumulator für einen Betrieb im von der Halteeinrichtung (36, 38, 40) abgelösten Zustand aufweist und in die Halteeinrichtung eine Ladeeinheit zum Aufladen eines Akkumulators der Anzeigeeinheit (34) integriert ist und die Halteeinrichtung (36, 38, 40) eine Signaleinheit aufweist, welche dazu ausgelegt ist, ein Zündung-Ein-Signal des Kraftwagens (10) von einem CAN-Bus, Controller Area Network, zu empfangen und bereitzustellen, und die Anzeigeeinheit (34) dazu ausgelegt ist, das Zündung-Ein-Signal von der Signaleinheit der Halteeinrichtung (36, 38, 40) zu empfangen, falls die Anzeigeeinheit (34) an der Halteeinrichtung (36, 38, 40) befestigt ist, und ihren Bedarf an elektrischer Leistung an den Betriebszustand des Kraftwagens (10) anzupassen, indem die Anzeigeeinheit (34) sich deaktiviert, falls der Kraftwagen (10) abgeschaltet ist.

## Claims

1. Motor vehicle (10) having an infotainment system (12) which has a control device (30) for the provision of infotainment functions and, as an operating interface, a display unit (34) which is structurally separate from the control device (30) and which has a screen (42) for displaying display data, wherein the control device (30) is configured for the provision of the display data and for the transmission of the display data to the display unit (34), and wherein a holding device (36, 38, 40) which is configured for mechanically holding the display unit (34) is provided in a motor vehicle interior (10') of the motor vehicle (10), wherein the holding device (36, 38, 40) and the display unit (34) are configured to be non-destructively and reversibly detachable from one another, and the control device (30) is designed to transmit the display data to the display unit (34) even in the state detached from the holding device (36, 38, 40), **characterised in that**
the display unit (34) has a battery for operation in the state detached from the holding device (36, 38, 40) and a charging unit for charging a battery of the display unit (34) is integrated into the holding device, and the holding device (36, 38, 40) has a signal unit, which is configured to receive and provide an ignition ON signal of the motor vehicle (10) from a CAN bus, Controller Area Network, and the display unit (34) is configured to receive the ignition ON signal from the signal unit of the holding device (36, 38, 40), when the display unit (34) is fixed to the holding device (36, 38, 40), and to adapt its electrical power requirement to the operating condition of the motor vehicle (10) by deactivating the display unit (34) when the motor vehicle (10) is switched off.

2. Motor vehicle (10) according to claim 1, wherein at least one operating element (42) of the operating interface is integrated into the display unit (34) and the display unit (34) is configured to transmit control data to the control device (30) as a function of an operation of the at least one operating element (42).

3. Motor vehicle (10) according to any one of the preceding claims, wherein the screen (42) is configured as a touch screen (42).

4. Motor vehicle (10) according to any one of the preceding claims, wherein the control device (30) and the display unit (34) each have a radio module and are configured to exchange data between one another via a radio link (48) of their radio modules, wherein a WLAN connection (50) and/or a Bluetooth connection is preferably provided by the radio modules as the radio link (48).

5. Motor vehicle (10) according to any one of the preceding claims, wherein the infotainment system (12) has a receiving device (54, 54', 56, 56', 58, 58', 60, 60') for a video data stream and/or Internet data stream other than the display unit (34), and the control device (30) is configured to relay a data stream received by the receiving device (54, 54', 56, 56', 58, 58', 60, 60') to the display unit (34).

6. Motor vehicle (10) according to any one of the preceding claims, wherein the infotainment system (12) has storage means other than the display unit (34) for storage and/or media reproducing means (52, 52') for playing at least a part of the display data, and the control device (30) is configured to retrieve the part of the display data and transmit it to the display unit (34).

7. Motor vehicle (10) according to any one of the preceding claims, wherein the display unit (34) has a security module in which authentication data is stored, and wherein the control device (30) is configured to transmit the display data to the display unit (34) only in the event that the display unit (34) is authenticated at the control device (30).

8. Motor vehicle (10) according to any one of the preceding claims, wherein a positioning device is provided in the motor vehicle (10) which is configured to position the display unit (34), and wherein the control device (30) is configured to transmit at least part of the display data according to positioning data of the positioning device.

9. Motor vehicle (10) according to any one of the preceding claims, wherein a layer of a flexible material is arranged on a transparent viewing pane of the screen (42) of the display unit (34).

10. Motor vehicle (10) according to any one of the preceding claims, wherein at least one holding location (38, 40) is provided in a rear (22) of the motor vehicle (10) by the holding device (36, 38, 40).

11. Motor vehicle (10) according to any one of the preceding claims, wherein the control device (30) comprises a first central processing unit (32) arranged in a front part (20) of the motor vehicle (10) and a second central processing unit (32') arranged in a rear part (22) of the motor vehicle (10), wherein both central processing units (32, 32') are each configured to provide part of the display data and the second central processing unit (32') is configured to transmit its display data to the display unit (34) solely where the display unit (34) is located in a rear compartment (22) of the motor vehicle (10).

12. Motor vehicle (10) according to any one of the preceding claims, wherein the infotainment system (12) comprises a plurality of display units (34) of this type.

13. Display unit (34) for an infotainment system (12) of a motor vehicle (10) according to any one of the preceding claims, wherein the display unit (34) has a mechanical interface which is configured to connect the display unit (34) to the holding device (36, 38, 40) of the motor vehicle (10) in a non-destructive and reversibly releasably mechanical and/or magnetic manner, and wherein the display unit (34) has its own central processing unit which is configured to cooperate with the control device (30) of the infotainment system (12) of the motor vehicle (10),
**characterised in that**
the display unit (34) has a battery for operation in the state detached from the holding means (36, 38, 40) and a charging unit for charging a battery of the display unit (34) is integrated into the holding means, and the holding means (36, 38, 40) comprises a signal unit configured to receive an ignition ON signal of the motor vehicle (10) from a CAN bus, Controller Area Network, and the display unit (34) is configured to receive the ignition ON signal from the signal unit of the holding means (36, 38, 40) when the display unit (34) is attached to the holding means (36, 38, 40) and to adapt its electrical power requirement to the operating state of the motor vehicle (10) by deactivating the display unit (34) when the motor vehicle (10) is switched off.

## Revendications

1. Véhicule à moteur (10) avec un système d'infodivertissement (12), qui présente pour fournir des fonctions d'infodivertissement un dispositif de commande (30) et, en tant qu'interface d'utilisation, une unité d'affichage (34) séparée structurellement du dispositif de commande (30), avec un écran (42) servant à représenter des données d'affichage, dans lequel le dispositif de commande (30) est configuré pour fournir des données d'affichage et pour transmettre les données d'affichage à l'unité d'affichage (34) et dans lequel est fourni dans un habitacle de véhicule à moteur (10') du véhicule à moteur (10) un dispositif de maintien (36, 38, 40), qui est configuré pour maintenir mécaniquement l'unité d'affichage (34), dans lequel le dispositif de maintien (36, 38, 40) et l'unité d'affichage (34) sont configurés pour pouvoir être détachés l'un de l'autre sans destruction et de manière réversible, et le dispositif de commande (30) est configuré pour transmettre les données d'affichage à l'unité d'affichage (34) également dans l'état détaché du dispositif de maintien (36, 38, 40),
**caractérisé en ce que**
l'unité d'affichage (34) présente un accumulateur pour un fonctionnement dans l'état détaché du dispositif de maintien (36, 38, 40) et une unité de charge servant à recharger un accumulateur de l'unité d'affichage (34) est intégrée dans le dispositif de maintien, et le dispositif de maintien (36, 38, 40) présente une unité de signaux, laquelle est configurée pour recevoir et fournir un signal d'allumage activé du véhicule à moteur (10) depuis un bus CAN (Controller Area Network, réseau local de commande) et l'unité d'affichage (34) est configurée pour recevoir le signal d'allumage activé de l'unité de signaux du dispositif de maintien (36, 38, 40) si l'unité d'affichage (34) est fixée au niveau du dispositif de maintien (36, 38, 40) et pour adapter son besoin en puissance électrique à l'état de fonctionnement du véhicule à moteur (10) **en ce que** l'unité d'affichage (34) se désactive si le véhicule à moteur (10) est arrêté.

2. Véhicule à moteur (10) selon la revendication 1, dans lequel au moins un élément d'utilisation (42) de l'interface d'utilisation est intégré dans l'unité d'affichage (34) et l'unité d'affichage (34) est configurée pour émettre en fonction d'une utilisation de l'au moins un élément d'utilisation (42) des données de commande au dispositif de commande (30).

3. Véhicule à moteur (10) selon l'une quelconque des revendications précédentes, dans lequel l'écran (42) est configuré en tant qu'écran tactile (42).

4. Véhicule à moteur (10) selon l'une quelconque des revendications précédentes, dans lequel le dispositif de commande (30) et l'unité d'affichage (34) présentent respectivement un module radio et sont configurés pour échanger des données entre eux par l'intermédiaire d'une connexion radio (48) de leurs modules radio, dans lequel une connexion WLAN (50) et/ou une connexion Bluetooth est fournie par les modules radio de manière préférée en tant que connexion radio (48).

5. Véhicule à moteur (10) selon l'une quelconque des revendications précédentes, dans lequel le système d'infodivertissement (12) présente un dispositif de réception (54, 54', 56, 56', 58, 58', 60, 60') autre que l'unité d'affichage (34) pour un flux de données vidéo et/ou un flux de données Internet et le dispositif de commande (30) est configuré pour transférer un flux de données reçu par le dispositif de réception (54, 54', 56, 56', 58, 58', 60, 60') à l'unité d'affichage (34).

6. Véhicule à moteur (10) selon l'une quelconque des revendications précédentes, dans lequel le système d'infodivertissement (12) présente un dispositif de stockage autre que l'unité d'affichage (34) servant au stockage et/ou un dispositif de restitution des médias (52, 52') servant à reproduire au moins une partie des données d'affichage et le dispositif de commande (30) est configuré pour consulter la partie des données d'affichage et la transmettre à l'unité d'affichage (34).

7. Véhicule à moteur (10) selon l'une quelconque des revendications précédentes, dans lequel l'unité d'affichage (34) présente un module de sécurité, dans lequel sont stockées des données d'authentification, et dans lequel le dispositif de commande (30) est configuré pour transmettre les données d'affichage à l'unité d'affichage (34) seulement si l'unité d'affichage (34) est authentifiée auprès du dispositif de commande (30).

8. Véhicule à moteur (10) selon l'une quelconque des revendications précédentes, dans lequel est fourni dans le véhicule à moteur (10) un dispositif de localisation, lequel est configuré pour localiser l'unité d'affichage (34), et dans lequel le dispositif de commande (30) est configuré pour transmettre au moins une partie des données d'affichage en fonction de données de localisation du dispositif de localisation.

9. Véhicule à moteur (10) selon l'une quelconque des revendications précédentes, dans lequel une couche composée d'un matériau flexible est disposée sur une fenêtre d'inspection transparente de l'écran (42) de l'unité d'affichage (34).

10. Véhicule à moteur (10) selon l'une quelconque des revendications précédentes, dans lequel au moins un emplacement de maintien (38, 40) est fourni dans un compartiment arrière (22) du véhicule à moteur (10) par le dispositif de maintien (36, 38, 40).

11. Véhicule à moteur (10) selon l'une quelconque des revendications précédentes, dans lequel le dispositif de commande (30) comprend une première unité de calcul (32) disposée dans une partie avant (20) du véhicule à moteur (10) et une seconde unité de calcul (32') disposée dans une partie arrière (22) du véhicule à moteur (10), dans lequel les deux unités de calcul (32, 32') sont configurées pour fournir respectivement une partie des données d'affichage et la seconde unité de calcul (32') est configurée pour transmettre à l'unité d'affichage (34) ses données d'affichage exclusivement dans le cas où l'unité d'affichage (34) se trouve dans un compartiment arrière (22) du véhicule à moteur (10).

12. Véhicule à moteur (10) selon l'une quelconque des revendications précédentes, dans lequel le système d'infodivertissement (12) présente plusieurs unités d'affichage (34) du type mentionné.

13. Unité d'affichage (34) pour un système d'infodivertissement (12) d'un véhicule à moteur (10) selon l'une quelconque des revendications précédentes, dans laquelle l'unité d'affichage (34) présente une interface mécanique, qui est configurée pour connecter mécaniquement et/ou magnétiquement de manière amovible sans destruction et de manière réversible l'unité d'affichage (34) au dispositif de maintien (36, 38, 40), et dans laquelle l'unité d'affichage (34) présente une propre unité de calcul, qui est configurée pour coopérer avec le dispositif de commande (30) du système d'infodivertissement (12) du véhicule à moteur (10),
**caractérisée en ce que**
l'unité d'affichage (34) présente un accumulateur pour un fonctionnement dans l'état détaché du dispositif de maintien (36, 38, 40) et une unité de charge servant à recharger un accumulateur de l'unité d'affichage (34) est intégrée dans le dispositif de maintien et le dispositif de maintien (36, 38, 40) présente une unité de signaux, laquelle est configurée pour recevoir et fournir un signal d'allumage activé du véhicule à moteur (10) depuis un bus CAN (Controller Area Network, réseau local de commande), et l'unité d'affichage (34) est configurée pour recevoir le signal d'allumage activé de l'unité de signaux du dispositif de maintien (36, 38, 40) si l'unité d'affichage (34) est fixée au niveau du dispositif de maintien (36, 38, 40) et pour adapter son besoin en puissance électrique à l'état de fonctionnement du véhicule à moteur (10) **en ce que** l'unité d'affichage (34) se désactive si le véhicule à moteur (10) est arrêté.
